# EUROPEAN PATENT APPLICATION

(11) **EP 2 911 254 A1**
(43) Date of publication of application: **26.08.2015**
(21) Application number: 13847802.9
(22) Date of filing: 11.10.2013
(51) Int. Cl.: H02G 3/30, H01B 7/00

(54) **CABLE HOLDING STRUCTURE**

(30) Priority: 18.10.2012 JP 2012230979
(71) Applicant: Yazaki Corporation, Minato-ku Tokyo 108-8333 (JP)
(72) Inventor: KATO, Hajime, Kakegawa-shi Shizuoka 437-1421 (JP); NAKAMURA, Miki, Kakegawa-shi Shizuoka 437-1421 (JP); OHMORI, Yoshitake, Kakegawa-shi Shizuoka 437-1421 (JP)
(74) Representative: Grünecker Patent- und Rechtsanwälte PartG mbB
(86) International application number: PCT/JP2013/077860
(87) International publication number: WO 2014/061618

(57) **Abstract**

A cable holding structure (11) is provided with: a plurality of cables (17); a cable-holding member (13) in which cable-accommodating groves (25) that accommodate the cables (17) are disposed in parallel to each other; and a strip-like band member (15) that winds around the cable-holding member (13) in a longitudinal direction perpendicular to the direction in which the cable-accommodating grooves (25) extend. The cable-holding member (13) is formed so as to deform elastically. The band member (15) bends the cable-holding member (13) in a direction in which groove openings of the cable-accommodating grooves close, thereby being wound and immobilized.

## Description

### Technical Field

The present invention relates to a cable holding structure which bundles a plurality of cables.

### Background Art

A wire harness as a bundle of a plurality of cables is arranged in a mobile object such as a car. A method for directly winding a binding tape around the plurality of cables, and a method for winding a cable tie etc. around an outer circumference of a casing where the plurality of cables are received and fixing the casing have been known as this kind of cable bundling methods. However, according to any of these methods, the cables make contact with one other. For this reason, there is a possibility that the cables may rub against one another to be abraded when the cables vibrate due to vibration from the outside.

To solve this problem, Patent Document 1 discloses a structure in which a plurality of grooves extending axially and in parallel with one another are formed in an outer circumferential surface of a cylindrical cable holding member formed out of an elastic material and cables are inserted into and assembled with the grooves respectively. In addition, Patent Document 2 discloses a structure in which a plurality of grooves extending axially and in parallel with one another are formed in an inner circumferential surface of a cylindrical holding member and cables are inserted into and assembled with these grooves respectively. According to these techniques, the cables inserted into and assembled with the grooves are held while being separate from one another. It is therefore possible to prevent abrasion from being caused among the cables by vibration.

### Citation List

### Patent Document

Patent Document 1: JP-A-11-306870
Patent Document 2: JP-UM-A-60-7108

### Summary of Invention

### Technical Problem

When the cable holding structure disclosed in any of Patent Documents 1 and 2 is applied to a wire harness, it is necessary to form the width of each groove opening as an entrance of each cable to be smaller than an outer diameter of the cable in order to prevent the cable from coming off from the groove due to vibration. However, assume that the width of the groove opening of the holding member is made thus smaller than the outer diameter of the cable. In this case, when the cable is inserted into and assembled with the groove, there is a problem that working efficiency may deteriorate because the cable must be inserted into the groove opening which has been widened.

The invention has been accomplished in consideration of the aforementioned circumstances. An object of the invention is to provide a cable holding structure in which working efficiency for assembling cables can be improved while cable holding force is enhanced.

### Solution to Problem

The aforementioned object according to the invention will be accomplished by the following configurations.
(1) A cable holding structure including: a plurality of cables; a cable holding member having a plurality of cable receiving grooves for receiving these cables therein, the cable receiving grooves being arranged in parallel with one another; and a belt-like band member that is wound on the cable holding member in a longitudinal direction thereof perpendicular to an extension direction of each of the cable receiving grooves of the cable holding member; wherein the cable holding member is formed to be deformable elastically; and wherein the band member is wound on the cable holding member and fixes to bend the cable holding member in a direction to close groove openings of the cable receiving grooves.
   According to the cable holding structure in the aforementioned configuration (1), even when the groove openings of the cable receiving grooves are formed largely (for example, the widths of the groove openings are formed to be larger than the outer diameters of the cables) in order to insert the cables easily into the cable receiving grooves respectively, the band member is wound and fixed on the cable holding member. Thus, the cable holding member is bent to result in a state in which the groove openings are closed or a state in which the widths of the groove openings are narrowed. Accordingly, cable holding force attained by the cable receiving grooves can be enhanced.
(2) The cable holding structure according to the aforementioned configuration (1), wherein the cable holding member is formed integrally with the band member.
   According to the cable holding structure in the aforementioned configuration (2), the band member is wound on the cable holding member so that the widths of the groove openings of the cable receiving grooves can be narrowed surely. Accordingly, the cable holding force attained by the cable receiving grooves can be enhanced efficiently. In addition, when the cable holding member and the band member are formed integrally with each other, the number of components can be reduced. Thus, the manufacturing cost can be reduced.
(3) The cable holding structure according to the aforementioned configuration (1) or (2), wherein the band member has a lock mechanism by which one end portion of the band member can be locked to the other end portion of the band member.

According to the cable holding structure in the aforementioned configuration (3), the opposite end portions can be locked to each other easily when the band member is deformed annularly. Accordingly, working efficiency can be enhanced.

### Brief Description of Drawings

[Fig. 1] Fig. 1 is a perspective view showing a state in which a cable holding member and a band member of a cable holding structure according to an embodiment of the invention are unfolded.
[Fig. 2] Fig. 2 is an exploded perspective view of the cable holding structure shown in Fig. 1, from which cables have been removed.
[Fig. 3] Fig. 3 is an external perspective view of the cable holding structure according to the embodiment of the invention.

### Description of Embodiment

A cable holding structure according to an embodiment of the invention will be described below with reference to the drawings. An example using a structure which bundles a plurality of cables of a wire harness mounted on a hybrid car, an electric car, etc. will be described in the embodiment.

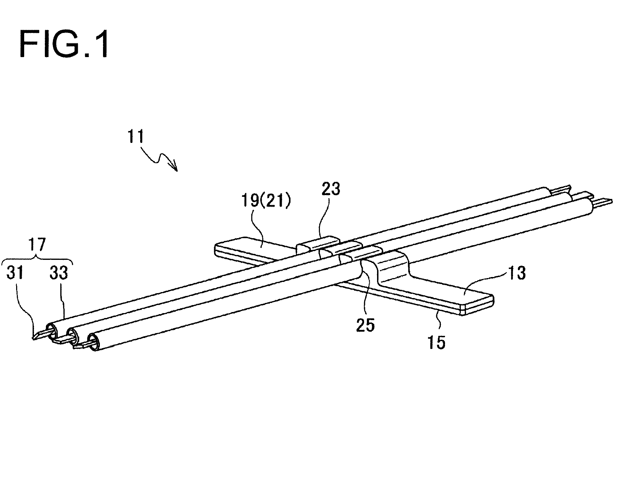

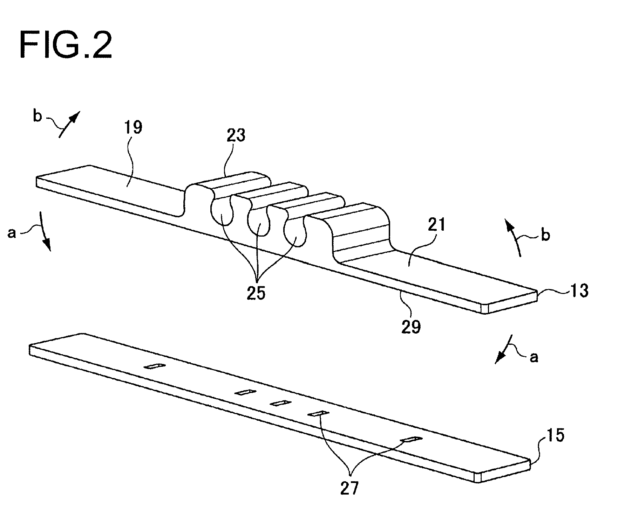

As shown in Fig. 1 and Fig. 2, a cable holding structure 11 according to the embodiment is configured to include a cable holding member 13, a band member 15, and cables 17. The cable holding member 13 and the band member 15 are formed into rectangular shapes equal in size to each other in planar view, and formed out of elastic materials.

As shown in Fig. 2, the cable holding member 13 includes a flat plate-like base portion 19, and a protrusion portion 23 protruding in the shape of a rectangular parallelepiped from one surface (hereinafter referred to as front surface 21) of the base portion 19. The cable holding member 13 is formed to be deformable elastically in a longitudinal direction.

The protrusion portion 23 is disposed in the middle of the base portion 19 in the longitudinal direction. A surface parallel with the front surface 21 of the base portion 19 is formed in the protrusion portion 23. A plurality of (three in the embodiment) cable receiving grooves 25 which extend in a direction perpendicular to the longitudinal direction of the base portion 19 are provided in the parallel surface. These cable receiving grooves 25 are disposed in parallel with one another in predetermined intervals. Wall surfaces are formed between adjacent ones of the cable receiving grooves 25. Each of the cable receiving grooves 25 has a groove section which is formed into a substantially circular shape to enclose the cable 17 therein, a groove depth which is set to be larger than the outer diameter of the cable 17, and a groove opening width which is set to be smaller than the outer diameter of the cable 17.

The band member 15 is formed into the shape of a flat plate. A plurality of through holes 27 are provided in predetermined positions of the band member 15 in the longitudinal direction. A plurality of protrusion portions (not shown) protruding from the other surface (hereinafter referred to as back surface 29) of the base portion 19 of the cable holding member 13 are fitted into these through holes 27 respectively. The band member 15 is formed to be deformable elastically in the longitudinal direction in the same manner as the base portion 19.

Each of the cables 17 is formed in such a manner that the circumference of a conductive cable core 31 is covered with a coating portion 33 made of an insulating material. The outer circumferential surface of the cable 17 is formed into a circular shape in section. The cables 17 equal in outer diameter to one another are received respectively in the three cable receiving grooves 25 formed in the protrusion portion 23 of the cable holding member 13.

Next, a procedure of assembling the cable holding structure 11 according to the embodiment will be described.

First, the cable holding member 13 is prepared, and the cables 17 are inserted into the cable receiving grooves 25 respectively. Here, the groove opening of each cable receiving groove 25 is set to be smaller than the outer diameter of each cable 17. Therefore, there is a fear that working efficiency may deteriorate when the cable 17 is intended to be press-fitted through the widened groove opening so that the cable 17 can be inserted into the cable receiving groove 25. In addition, there is a fear that the coating portion 33 of the cable 17 may be damaged when the cable 17 is forcibly press-fitted.

In this respect, since the cable holding member 13 can be deformable elastically in the longitudinal direction, opposite end portions of the cable holding member 13 can be bent in a direction of an arrow a in Fig. 2, so that the cable holding member 13 can be deformed in the shape of an arc as a whole. Then, the groove openings of the three cable receiving grooves 25 can be widened in accordance with the deformation of the cable holding member 13. Accordingly, the cables 17 can be easily inserted into the cable receiving grooves 25 without being damaged.

Next, the plurality of protrusion portions protruding from the back surface 29 of the cable holding member 13 are inserted into the through holes 27 of the band member 15 respectively. Thus, the cable holding member 13 and the band member 15 are put on top of each other in the longitudinal direction so that the cable holding member 13 can be supported by the hand member 15.

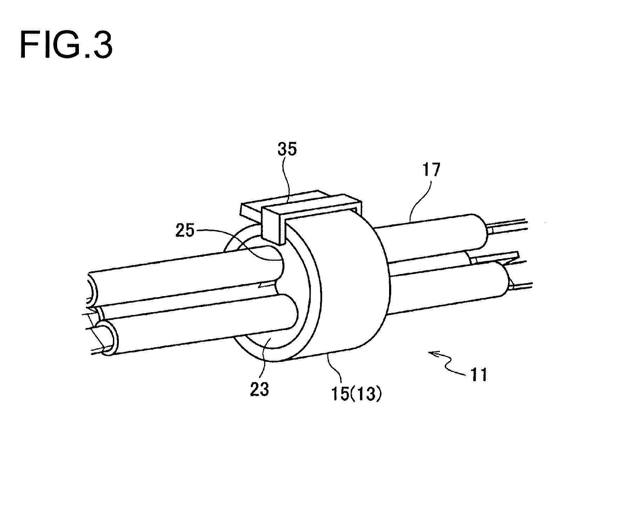

Successively, the band member 15 is wound annularly on the cable holding member 13 which is positioned on an inner circumferential side, and opposite end portions of the band member 15 are fixed to each other by a known lock mechanism. In this manner, the cable holding structure 11 can be obtained (see Fig. 3).

As shown in Fig. 3, a frame body 35 shaped like a rectangle in section and constituting the lock mechanism is formed integrally with one of the end portions of the band member 15. When the other end portion is inserted into the frame body 35, the other end portion is locked to an inner circumferential surface of the frame body 35. Incidentally, in order to make it easy to understand the lock mechanism of the band member 15, the cable holding member 13 and the band member 15 are illustrated integrally with each other in Fig. 3.

An effect obtained when the cable holding structure 11 according to the embodiment holds the cables 17 will be described here.

When the band member 15 is wound annularly, the cable holding member 13 is bent in a direction of an arrow b in Fig. 2. Then, the cable receiving grooves 25 are deformed in a direction to close the groove openings in accordance with the deformation of the cable holding member 13. In addition, the inner wall surfaces of the cable receiving grooves 25 making contact with the cables 17 act to press the cables 17. Accordingly, the cables 17 are strongly held by the cable receiving grooves 25 so that the cables 17 can be prevented from being twisted inside the cable receiving grooves 25 and from coming off from the groove openings of the cable receiving grooves 25.

In addition, since the three cables 17 are held in predetermined intervals from one another, the cables 17 can be prevented from making contact with one another. In addition, vibration from the outside (a drive portion of a car etc.) may be propagated to the cables 17. However, since the cable holding member 13 is formed out of an elastic material, the cable holding member 13 can absorb vibration of the cables 17 and prevent stress concentration on the cable receiving grooves 25. Accordingly, the coating portions 33 of the cables 17 making contact with the cable receiving grooves 25 can be prevented from being abraded so that reliability of the cables 17 can be maintained high.

An example in which two components, that is, the cable holding member 13 and the band member 15 are put on top of each other and the cable holding member 13 is deformed in a direction to close the groove openings of the cable receiving grooves 25 due to the bending of the band member 15 has been described in the aforementioned embodiment. When the two components are used in this manner, there is a merit that, for example, the materials of the cable holding member 13 and the band member 15 can be selected in accordance with their functions respectively. That is, since the cable holding member 13 has portions directly holding the cables 17, it is preferable that an elastic material excellent in vibration absorption and high in adhesion to the cable 17 is selected as the material of the cable holding member 13. On the other hand, since the hand member 15 is provided for maintaining the deformed state of the cable holding member 13, it is preferable that an elastic material comparatively high in strength and excellent in elasticity is selected as the material of the band member 15.

Incidentally, the invention is not limited to the case where the cable holding member 13 and the band member 15 are formed separately. Alternatively, the cable holding member 13 and the band member 15 may be formed integrally. That is, the base portion 19 of the cable holding member 13 and the band member 15 may be formed to be integrated with each other. In this manner, when the band member 15 is wound, the width of each of the groove openings of the cable receiving grooves 25 can be narrowed surely. Accordingly, the force for holding the cables 17 can be enhanced efficiently. In addition, when the two components are integrated in this manner, the number of components can be reduced. Accordingly, the manufacturing cost can be reduced.

In addition, an example in which the cable holding member 13 and the band member 15 are formed into rectangular shapes equal in size to each other in planar view has been described in the embodiment. However, the invention is not limited to this example. For example, a part or the whole of the base portion 19 formed on the opposite sides of the protrusion portion 23 in the longitudinal direction (the direction perpendicular to the cable receiving grooves 25) may be removed from the cable holding member 13. That is, since the base portion 19 is provided for transmitting the deformation of the band member 15 to the cable holding member 13 and deforming the groove openings of the cable receiving grooves 25, the base portion 19 may be removed as long as the groove openings of the cable receiving grooves 25 can be deformed in spite of absence of the base portion 19.

In addition, although an example in which three cables 17 equal in outer diameter to one another are bundled and held has been described in the embodiment, the dimensions of the grooves of the cable receiving grooves 25 may be set respectively in accordance with the outer diameters of the cables 17 so that the cables 17 having different sectional shapes or sizes can be bundled and held. In addition, although an example in which the width of the groove opening of each cable receiving groove 25 is set to be smaller than the outer diameter of each cable 17 has been described in the embodiment, the invention is not limited to this example. In brief, the widths of the groove openings may be set to be not smaller than the outer diameters of the cables 17 as long as the state in which the cables 17 are received in the cable receiving grooves 25 can be maintained and the state in which the cables 17 do not make contact with one another can be maintained when deformation is made in a direction to close the groove openings of the cable receiving grooves 25. In this manner, the working efficiency with which the cables 17 are inserted into the cable receiving grooves 25 can be enhanced.

Here, the aforementioned characteristics of the embodiment of the cable holding structure according to the invention are summarized briefly in the following configurations [1] to [3].
[1] A cable holding structure 11 including: a plurality of cables 17; a cable holding member 13 having a plurality of cable receiving grooves 25 for receiving these cables 17 therein, the cable receiving grooves being arranged in parallel with one another; and a belt-like band member 15 that is wound on the cable holding member 13 in a longitudinal direction thereof perpendicular to an extension direction of each of the cable receiving grooves 25 of the cable holding member 13; wherein the cable holding member 13 is formed to be deformable elastically; and wherein the band member 15 is wound on the cable holding member 13 and fixes to bend the cable holding member 13 in a direction to close groove openings of the cable receiving grooves 25.
[2] The cable holding structure 11 according to the aforementioned configuration [1], wherein: the cable holding member 13 is formed integrally with the band member 15.
[3] The cable holding structure 11 according to the aforementioned configuration [1] or [2], wherein: the band member 15 has a lock mechanism (frame body) 35 by which one end portion of the band member 15 can be locked to the other end portion of the band member.

In addition, the present application is based on a Japanese patent application (Patent Application No. 2012-230979) filed on October 18, 2012, the contents of which are incorporated herein by reference.

### Industrial Applicability

According to the cable holding structure according to the invention, it is possible to improve the working efficiency for assembling the cables while enhancing the force for holding the cables.

### Reference Signs List

- 11: cable holding structure
- 13: cable holding member
- 15: band member
- 17: cable
- 19: base portion
- 23: protrusion portion
- 25: cable receiving groove
- 35: frame body (lock mechanism)

## Claims

1. A cable holding structure comprising:
a plurality of cables;
a cable holding member having a plurality of cable receiving grooves for receiving the cables therein, the cable receiving grooves being arranged in parallel with one another; and
a belt-like band member that is wound on the cable holding member in a longitudinal direction thereof perpendicular to an extension direction of each of the cable receiving grooves of the cable holding member,
wherein the cable holding member is formed to be deformable elastically; and
wherein the band member is wound on the cable holding member and fixes to bend the cable holding member in a direction to close groove openings of the cable receiving grooves.

2. The cable holding structure according to claim 1, wherein the cable holding member is formed integrally with the band member.

3. The cable holding structure according to claim 1 or 2, wherein the band member has a lock mechanism by which one end portion of the band member can be locked to the other end portion of the band member.
